# FASCICULE DE BREVET EUROPEEN

(11) **EP 2 225 009 B1**
(45) Date de publication et mention de la délivrance du brevet: **27.04.2016**
(21) Numéro de dépôt: 08871385.4
(22) Date de dépôt: 24.10.2008
(51) Int. Cl.: B01J 8/04, C10G 49/00, B01J 8/02, C10G 31/09

(54) **DISPOSITIF DE FILTRATION ET DE PREDISTRIBUTION POUR REACTEUR A LIT FIXE A CO-COURANT DESCENDANT DE GAZ ET DE LIQUIDE ET UTILISATION DUDIT DISPOSITIF**
FILTER- UND VORVERTEILUNGSVORRICHTUNG FÜR EINEN FESTBETTREAKTOR MIT GAS/FLÜSSIGKEITS-GLEICHSTROM-ABWÄRTSFLUSS UND VERWENDUNG DERSELBEN
FILTRATION AND PREDISTRIBUTION DEVICE FOR A FIXED-BED REACTOR WITH DESCENDING GAS/LIQUID CO-CURRENT FLOW AND USE THEREOF

(30) Priorité: 17.12.2007 FR 0708852
(43) Date de publication de la demande: 08.09.2010
(73) Titulaire: IFP Énergies nouvelles, 92852 Rueil-Malmaison Cedex (FR)
(72) Inventeur: KOUDIL, Adbelhakim, F-69001 Lyon (FR); BOYER, Christophe, F-69390 Charly (FR)
(86) Numéro de dépôt international: PCT/FR2008/001502
(87) Numéro de publication internationale: WO 2009/092875

(56) Documents cités:
- EP-A- 0 050 505
- EP-A- 0 781 830
- EP-A- 1 640 062
- FR-A- 2 889 973
- US-A- 3 607 000
- US-A- 5 670 116

## Description

### DOMAINE DE L'INVENTION

L'invention concerne le domaine des plateaux distributeurs destinés à alimenter en gaz et en liquide des réacteurs chimiques fonctionnant à co-courant descendant de gaz et de liquide.

On rencontre de tels réacteurs dans le domaine du raffinage, plus particulièrement dans les réactions d'hydrogénation sélective de diverses coupes pétrolières, et plus généralement dans les hydrotraitements qui nécessitent des flux d'hydrogène sous pression élevée et travaillent avec des charges liquides lourdes pouvant contenir des impuretés constituées de particules solides colmatantes.

Dans certains cas en effet, la charge liquide contient des impuretés qui peuvent se déposer sur le lit catalytique lui même et, au fil du temps, réduire le volume interstitiel de ce lit catalytique.

Parmi ces charges liquides colmatantes, on peut citer les mélanges d'hydrocarbures ayant de 3 à 50 atomes de carbone, et préférentiellement de 5 à 30 atomes de carbone, et pouvant contenir une proportion non négligeable de composés insaturés ou poly-insaturés acétyléniques ou diéniques, ou une combinaison de ces différents composés, la proportion totale de composés insaturés pouvant aller jusqu'à 90% poids dans la charge.

On peut citer à titre d'exemple représentatif des charges concernées par la présente invention l'essence de pyrolyse, la pyrolyse désignant un procédé de craquage thermique bien connu de l'homme du métier.

La présente invention permet à la fois de limiter le dépôt de particules colmatantes au sein du lit catalytique et de réguler le débit liquide arrivant sur le plateau distributeur situé en aval du présent dispositif. Pour cette raison, le présent dispositif est qualifié de plateau filtrant de prédistribution ou prédistributeur filtrant

Le plateau distributeur situé en aval du présent prédistributeur est un plateau distributeur comportant des cheminées effectuant le mélange du gaz et du liquide, et présentant un niveau de liquide minimum. Par exemple, ce plateau distributeur aval peut être analogue à celui décrit dans la demande française déposée sous le numéro: FR 2889973.

Le prédistributeur décrit dans la présente invention augmente la capacité du réacteur à travailler avec des charges liquides colmatantes et garantit une alimentation liquide homogène du plateau distributeur situé en aval (plus simplement appelé dans la suite du texte "plateau aval").

En effet, lorsqu'un bouchage se produit au sein d'un lit catalytique, on constate très vite une montée de la perte de charge de l'écoulement au travers du réacteur.

La perte de charge peut devenir telle que l'exploitant est obligé d'arrêter le réacteur et de remplacer une partie ou la totalité du catalyseur, ce qui entraîne bien sûr une réduction considérable des durées de cycles du procédé.

Le bouchage d'une partie du lit catalytique peut être dû à plusieurs mécanismes.

Directement, la présence de particules dans le flux de la charge peut entraîner un bouchage par dépôt des dites particules au sein du lit catalytique, ce dépôt ayant pour effet de réduire la fraction vide du lit catalytique.

Indirectement, la formation d'une couche de sous produits issus des réactions chimiques parasites, sous produits regroupés sous le terme générique de "coke", qui se déposent à la surface des grains de catalyseur, peut également contribuer à la réduction de la fraction vide du lit.

De plus, le dépôt des particules colmatantes se faisant généralement au sein du lit de manière aléatoire, il peut en résulter des hétérogénéités dans la répartition de la fraction vide de ce lit qui vont se traduire par la création de chemins préférentiels pour la phase liquide circulant à courant descendant.

Ces chemins préférentiels sont extrêmement préjudiciables sur le plan hydrodynamique puisqu'ils perturbent gravement l'homogénéité de l'écoulement des phases au sein du lit et peuvent conduire à des hétérogénéités au niveau de l'avancement de la réaction chimique, ainsi que sur le plan thermique.

La présente invention permet de réduire la probabilité d'avènement de ces phénomènes. Lorsqu'ils se produisent, elle permet d'augmenter le temps de fonctionnement du réacteur avant le bouchage obligeant à un arrêt.

### EXAMEN DE L'ART ANTERIEUR

La demande FR 2889973 décrit un plateau de filtration et de distribution pour un réacteur catalytique à lit fixe à co-courant descendant de gaz et de liquide.

Les brevets US-4,313,908 et EP-0.050.505-B1 décrivent des dispositifs qui permettent de diminuer la perte de charge engendrée dans le lit catalytique et de minimiser son augmentation en déviant une partie de l'écoulement au travers de tubes. Une série de tubes formant court circuit traverse le lit catalytique. L'entrée de ces tubes est située à l'aval d'un plateau distributeur et la sortie de ces tubes débouche au dessus de l'entrée du lit catalytique à différents niveaux. Le système permet ainsi de dévier indépendamment les écoulement de gaz et de liquide à condition qu'un niveau liquide s'établisse à l'amont du lit. Le dispositif décrit dans les brevets cités ne permet pas de contrôler le ratio entre les débits liquide et gaz déviés dans les tubes composant le dit système. En effet, le gaz est dévié dés le début du fonctionnement du réacteur, et le liquide n'est dévié que lorsqu'un niveau suffisant de liquide s'établit au dessus du lit du fait de l'encrassement.

En outre, en sortie des dispositifs décrits dans les deux brevets cités, il n'y a aucun effet de distribution des fluides, ce qui nécessite la mise en place en aval du dispositif, d'un plateau distributeur ou d'un système équivalent. Dans le cas de la présente invention, une partie de la fonction de distribution est incorporée au système de filtration pour former un dispositif unique, même si le présent dispositif est couplé avec un plateau distributeur placé en aval. Dans le brevet US 3,958,952 le plateau objet de l'invention est constitué d'une série d'unités de filtration chacune étant constituée d'une alternance de chambres concentriques, les unes vides et les autres occupées par des "corps filtrants" qui ne sont pas précisés.

Dans un tel système, la fonction de filtration est complètement séparée de la fonction de mélange et de distribution, alors que dans le dispositif objet de la présente invention, il y a une intégration entre le lit de filtration et la distribution assurée par les cheminées dédiées au gaz et par les orifices du plateau pour le liquide.

En effet le tube déverseur intégré au plateau selon l'invention a une fonction de stabilisation de l'interface gaz /liquide du plateau situé en aval, et contribue ainsi à une alimentation uniforme en liquide dudit plateau aval.

Le dispositif décrit dans la présente invention est couplé avec un plateau distributeur situé en aval et a pour effet de protéger ce dernier des éventuels à coups dans le débit de liquide.

Il permet d'effectuer une première filtration de la charge éventuellement complétée au niveau du plateau distributeur lorsque ce dernier est équipé d'éléments de filtration, comme c'est le cas du plateau décrit dans la demande de brevet FR 2 889 973. Néanmoins, le présent dispositif peut être couplé avec un plateau distributeur aval ne comportant pas d'élément de filtration de la charge, auquel cas c'est le dispositif objet de la présente invention qui assure à lui seul la fonction de filtration.

### DESCRIPTION SOMMAIRE DES FIGURES

La figure 1 représente un schéma d'un plateau de prédistribution filtrant selon l'invention, le dit plateau étant placé en amont d'un plateau de distribution tel que décrit dans la demande de brevet FR 2889973.
La figure 2 représente une vue d'ensemble d'un réacteur équipé du plateau de prédistribution selon l'invention, suivi d'un plateau de distribution placé en aval, puis encore en aval du lit catalytique lui même, la charge gaz et liquide s'écoulant à co courant descendant le long du lit catalytique.
La figure 3 utilisée dans l'exemple comparatif représente l'évolution dans le temps de la perte de charge prise entre deux points du lit catalytique avec et sans le dispositif selon l'invention.

### DESCRIPTION SOMMAIRE DE L'INVENTION

Le dispositif décrit dans la présente invention permet de piéger les particules colmatantes contenues dans l'écoulement liquide constituant la charge liquide d'un réacteur fonctionnant à co-courant descendant de gaz et de liquide, au moyen d'un plateau de prédistribution comportant un milieu filtrant.

Ce plateau de prédistribution est également équipé d'au moins un tube, dit tube déverseur, sensiblement vertical dont l'extrémité inférieure se situe à une distance du plateau distributeur aval (Di), telle que cette distance (Di) soit inférieure à 300 mm, et préférentiellement inférieure à 200 mm.

Dans une variante préférée du dispositif selon l'invention, le tube déverseur plonge au sein de la phase liquide du plateau distributeur aval, de manière qu'en cas de variation brutale du débit de charge liquide, la répercussion de cette variation soit atténuée au niveau du plateau distributeur aval.

Le présent dispositif assure donc une double fonction de filtration et de régulation du débit liquide. De plus, il contribue à la bonne distribution du gaz et du liquide puisque le liquide s'écoule en majeure partie à travers des orifices ménagés sur le fond du plateau de prédistribution, et le gaz s'écoule à travers des cheminées régulièrement réparties sur toute la section du plateau de prédistribution.

Plus précisément, le dispositif objet de la présente invention peut se définir comme un plateau de filtration et de prédistribution d'une phase gaz et d'une phase liquide selon la revendication 1 et l'utilisation dudit plateau selon la revendication 3. Selon une variante préférée du dispositif selon l'invention, le tube servant de déversoir (4) s'étend jusqu'à un niveau inférieur situé au sein de la phase liquide surmontant le plateau distributeur aval (10).

De préférence, le lit de filtration équipant le dispositif selon l'invention est constitué de plusieurs couches de particules solides qui sont généralement inertes, mais peuvent dans certains cas être catalytiquement actives.

Le lit de filtration comprend au moins deux couches de particules et dans ce cas, la première couche supérieure est constituée de particules inertes de diamètre compris entre 10 et 30 mm, et la seconde couche inférieure est constituée de particules inertes de diamètre compris entre 2 et 10 mm.

De manière préférée, les cheminées (3) servant à l'écoulement du gaz sont régulièrement réparties sur toute la section du plateau de prédistribution. La densité des cheminées est comprise entre 30 et 100 par m² de section de lit.

Le diamètre (do) des orifices (7) pour le passage du liquide sur le plateau est compris entre 3 et 6 mm.

Le diamètre (Dt) du tube déverseur (4), et le diamètre (ds) de l'orifice de sortie (6) dudit tube déverseur sont de préférence calculés en fonction du diamètre du réacteur (Dr) de manière à pouvoir écouler facilement les à coups de débits liquide, sans perturber pour autant la phase liquide surmontant le plateau distributeur aval (10).

Le diamètre (Dt) du tube déverseur (4) est une fonction croissante du diamètre du réacteur (Dr), et est compris entre 40 mm et 350 mm, et préférentiellement compris entre 70 mm et 250 mm.

Le diamètre (ds) de l'orifice de sortie (6) dudit tube déverseur est une fonction croissante du diamètre du réacteur (Dr), et est compris entre 30 mm et 300 mm.

La détermination précise du diamètre (ds) de l'orifice de sortie (6) du tube déverseur se fait en respectant un critère de vitesse de sortie du liquide qui est de préférence inférieure à 150 cm/s, et plus préférentiellement inférieure à 120 cm/s.

De préférence, la hauteur totale (Ht) du lit de filtration est comprise entre 200 mm à 600 mm.

Les cheminées (3) du plateau de prédistribution selon l'invention dépassent le niveau supérieur du lit de filtration d'une hauteur (Hc) comprise entre 5 mm et 100 mm. Éventuellement, les cheminées (3) destinées à l'écoulement du gaz sont équipées à leur extrémité supérieure d'un chapeau de protection contre l'entrée du liquide. Dans ce cas, le diamètre des chapeaux est préférentiellement supérieur de 10 mm au diamètre des cheminées De la même manière, afin de limiter l'entrée de gaz à l'intérieur du tube déverseur (4), chaque tube déverseur (4) peut être muni à sa partie supérieure d'un chapeau (5). Dans ce cas, le chapeau (5) a préférentiellement un diamètre supérieur de 10 mm au moins au diamètre (Dt) du tube dudit tube déverseur (4).

Chaque tube déverseur (4) a sa partie supérieure qui reste contenue à l'intérieur du lit de filtration (2). Le cas particulier d'un tube déverseur (4) affleurant le niveau supérieur du lit de filtration (2) reste parfaitement dans le cadre de l'invention.

Le plateau de prédistribution selon l'invention permet d'alimenter un plateau distributeur (10) placé en aval. Ce plateau distributeur peut être de tout type, et en particulier d'un type correspondant à celui décrit dans la demande de brevet FR 2 889 973.

De préférence, le plateau distributeur aval (10) comprend des cheminées pour l'écoulement du gaz, les dites cheminées présentant des fentes latérales ou des orifices percés dans la paroi latérale desdites cheminées, de manière à permettre une entrée du liquide à l'intérieur même des cheminées dans lesquelles va s'effectuer le mélange avec la phase gaz. Cette fonction de mélange du gaz et du liquide n'est pas recherchée au niveau des cheminées (3) du plateau de prédistribution qui ne possèdent donc généralement pas d'ouvertures latérales.

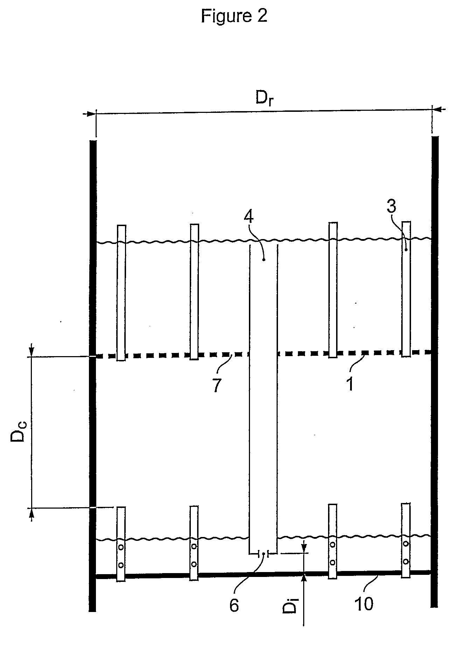

La distance (Dc) séparant le plateau de prédistribution du plateau de distribution aval est telle que le plan de base du dispositif est situé à plus de 50 mm de la partie la plus haute du plateau distributeur aval (10). On entend par l'expression "partie la plus haute du plateau de distribution aval", l'extrémité dudit plateau présentant la plus grande hauteur. C'est, en général, l'extrémité supérieure des cheminées équipant le plateau distributeur aval (10), comme représenté sur la figure 2.

Le dispositif selon la présente invention peut s'appliquer à tout type de réacteur fonctionnant à co courant descendant de gaz et de liquide et travaillant sur une charge liquide colmatante.

Le dispositif de préfiltration et de distribution selon l'invention est utilisé dans un réacteur d'hydrotraitement, d'hydrogénation sélective, ou de conversion de résidus ou de conversion de coupes hydrocarbonées à nombre d'atomes de carbone pouvant aller de 3 à 50, et préférentiellement de 5 à 30.

Le dispositif de filtration et de distribution selon la présente invention permet un allongement significatif de la durée de cycle du catalyseur mis en oeuvre dans le réacteur, comme cela sera illustré dans l'exemple ci dessous. Le plus souvent, le remplacement périodique du lit de filtration est réalisé avec une périodicité d'au moins 6 mois, et plus préférentiellement d'au moins 9 mois.

### DESCRIPTION DETAILLEE DE L'INVENTION

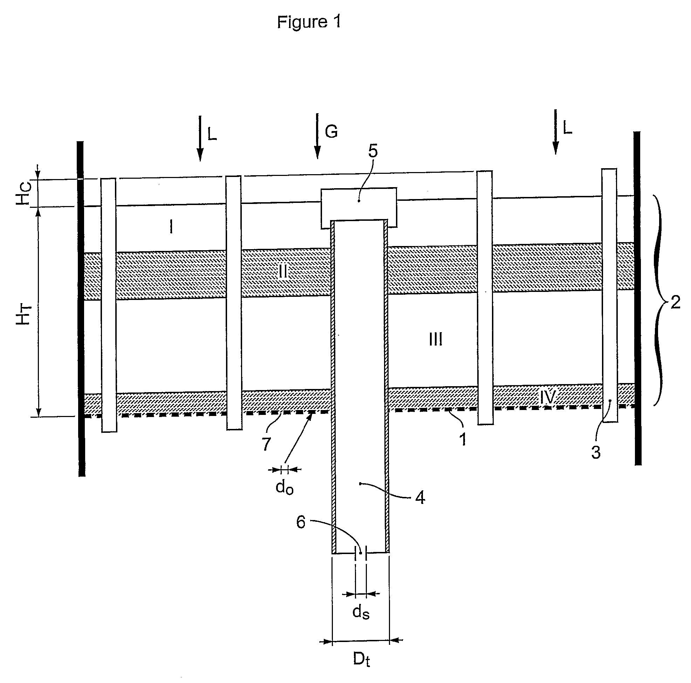

La présente description est effectuée au moyen des figures 1 et 2.

Le dispositif objet de la présente invention se compose d'un plateau de prédistribution comportant un plan de base (1) sensiblement horizontal (appelé dans la suite plan de base), solidaire des parois du réacteur, sur lequel sont fixées un ensemble de cheminées sensiblement verticales (3), munies d'une ouverture supérieure située au dessus du niveau supérieur du lit de filtration (2), et d'une ouverture inférieure située sensiblement au niveau du plan horizontal du plateau (1).

Le plan de base (1) est percé d'orifices (7) de diamètre (do) répartis de manière régulière sur toute la section du plateau (1).

La partie gaz de l'alimentation pénètre à l'intérieur des cheminées (3) par l'ouverture supérieure, et la partie liquide de l'alimentation est introduite au dessus du lit de filtration (2) à l'intérieur duquel elle se répand progressivement pour quitter le plateau par les orifices (7) découpées sur le plan de base (1).

Le plateau distributeur supporte un lit de filtration (2) constitué au moins deux couches de solide granulaire faisant office de filtre, ledit lit solide granulaire entourant chacune des cheminées.

Les cheminées (3) dépassent le niveau du lit de filtration d'une hauteur (Hc) comprise entre 5 et 100 mm.

Le lit de filtration peut comporter plusieurs couches de particules de forme quelconque.

La taille des particules constituant chaque couche du lit de filtration diminue de préférence du haut vers le bas du lit de filtration.

Les particules de la couche inférieure (ou la plus basse) possède une taille moyenne de préférence inférieure à la taille des particules de catalyseur constituant le lit catalytique situé en aval du plateau distributeur.

Le plus souvent, mais pas systématiquement, la taille des particules de chaque couche varie entre 2 mm et 30 mm.

Dans le dispositif de filtration et de distribution selon l'invention, le lit de filtration est composé d'au moins deux couches de particules solides, la taille des particules d'une couche donnée étant inférieure à celle des particules de la couche immédiatement supérieure.

La taille des particules de la couche supérieure du lit de filtration est comprise entre 10 et 30 mm, et la taille des particules de la couche inférieure est comprise entre 2 mm et 10 mm.

A titre purement illustratif, et sans que cela constitue une quelconque limitation, un lit de filtration conforme au dispositif selon l'invention peut être constitué:
- d'une couche supérieure représentant 25 % de la hauteur totale du lit de filtration, et composée de particules de type ACT 068, de taille 25mm.
- d'une couche intermédiaire représentant 25 % de la hauteur totale du lit de filtration, et composée de particules de type ACT 108, de taille 8mm.
- d'une couche inférieure représentant 50 % de la hauteur totale du lit de filtration, et composée de particules inertes de taille inférieure ou égale à celle des grains de catalyseur.

Les particules formant le lit de filtration peuvent avoir une forme quelconque, par exemple sphérique ou cylindrique, avec ou sans volume vide à l'intérieur. Elles sont généralement inertes, mais peuvent éventuellement être catalytiques. Dans ce dernier cas, les particules actives du lit de filtration sont de préférence constituées d'un catalyseur de la même famille que le catalyseur utilisé dans le lit catalytique situé en aval du lit de filtration.

Le lit de filtration peut également être constitué d'éléments de garnissage offrant une importante surface de captation des impuretés tout en ayant une fraction de vide élevée, comme par exemple des éléments de grille JOHNSON.

Un exemple de composition d'un lit de filtration au moyen de plusieurs couches est donné dans l'exemple détaillé faisant suite à la présente description.

La hauteur totale du lit de filtration est comprise entre 200 et 600 mm.

Le diamètre intérieur des cheminées est de préférence compris entre 10 mm et 150 mm, et plus préférentiellement compris entre 25 mm et 80 mm.

Les cheminées (3) sont de préférence régulièrement espacées d'une distance comprise entre 150 et 600 mm, plus préférentiellement comprise entre 300 et 500 mm.

Le lit de filtration se colmate progressivement au fil du temps en commençant par les couches inférieures, et il se crée sensiblement un interface entre la portion inférieure colmatée, et la portion supérieure non colmatée.

Le liquide traverse le lit de filtration sur sa portion supérieure non colmatée, et finit par atteindre le niveau supérieur des tubes déverseurs (4). Il traverse alors lesdits tube déverseurs pour être directement introduit à proximité du plateau distributeur aval (10), et préférentiellement dans la phase liquide du plateau distributeur aval (10).

La phase gaz traverse les cheminées depuis leur ouverture supérieure jusqu'à leur ouverture inférieure.

L'ouverture supérieure des cheminées est située à une hauteur (Hc) au dessus du lit de filtration comprise entre 5 et 100 mm. Les ouvertures supérieures des cheminées (3) sont éventuellement protégées par un chapeau ou toute forme équivalente, ayant pour but d'empêcher l'introduction directe de liquide par les dites ouvertures supérieures des cheminées. Dans ce cas, le diamètre des chapeaux recouvrant l'extrémité supérieure des cheminées (3) est supérieur de 10 mm au diamètres desdites cheminées.

De la même manière, le ou les tubes déverseurs (4) peuvent être équipés de chapeaux ou toute forme équivalente, pour éviter l'introduction de gaz.

Sur la figure 1, le tube déverseur (4) est muni d'un chapeau dont le diamètre est supérieur de 10 mm à celui dudit tube déverseur, de manière à réduire autant que possible les éventuelles entrées de gaz à l'intérieur du tube déverseur.

Sur la figure 2, le tube déverseur plonge à l'intérieur de la phase liquide du plateau distributeur aval, ce qui correspond à une configuration préférée.

A titre d'illustration, la figure 1 montre un lit de filtration constitué de haut en bas de 4 couches :
- une première couche (I) de 100 mm d'épaisseur constituée de billes inertes de type ACT 068, de 25 mm de diamètre,
- une seconde couche (II) de 100 mm d'épaisseur constituée de billes inertes de type ACT 108, de 8 mm de diamètre,
- une troisième couche (III) de 200 mm d'épaisseur constituée de particules de catalyseur de 2 mm de diamètre,
- une quatrième (IV) couche de billes d'alumine de 6,3 mm de diamètre.

L'appellation ACT est une appellation commerciale de billes vendues par la société CTI située à Salindres (Gard).

### EXEMPLE

L'exemple suivant est un exemple comparatif entre deux configurations d'un réacteur d'hydrogénation sélective.
- une configuration (A) avec un plateau distributeur unique
- une configuration (B) avec le plateau distributeur de la configuration (A) précédé du plateau de prédistribution avec tube déverseur selon la présente invention.

Le réacteur a un diamètre de 1 mètre, et une hauteur totale de 5 mètres, incluant le plateau de prédistribution selon l'invention, le plateau distributeur aval et le lit catalytique.

Le lit catalytique est composé de particules d'un catalyseur traditionnel pour effectuer l'hydrogénation sélective. Il s'agit d'un catalyseur contenant du Ni déposé sur un support d'alumine.

La taille des particules de catalyseur formant le lit catalytique situé en aval du plateau distributeur aval est de 2 mm.

L'alimentation du réacteur se compose d'une partie liquide et d'une partie gaz.

Le liquide est constitué d'une essence de pyrolyse d'intervalle d'ébullition compris entre 50°C et 280 °C avec un point d'ébullition moyen à 120°C dans les conditions standards.

La phase gaz est composée à 90 % molaire d'hydrogène, le reste étant essentiellement du méthane.

Le plateau de prédistribution selon l'invention possède :
- 10 cheminées d'un diamètre de 50 mm, régulièrement réparties sur ledit plateau,
- 1 tube déverseur d'un diamètre de 50 mm muni d'un orifice de diamètre 45 mm.
- Un lit de filtration constitué d'une couche inférieure de 40 cm d'épaisseur, et d'une couche supérieure de 10 cm d'épaisseur.

La couche inférieure est constituée de particules d'alumine de 2 mm de diamètre et la couche supérieure est constituée de particules de type ACT 068 de 25 mm de diamètre.

Le tube déverseur plonge dans la phase liquide du plateau distributeur aval.

Le plateau distributeur aval possède 40 cheminées d'un diamètre de 25 mm et d'une hauteur de 175 mm, chaque cheminée étant munie de trous latéraux disposés sur trois étages pour permettre l'introduction du liquide à l'intérieur des cheminées et le mélange du liquide avec le gaz.

Les propriétés du gaz et du liquide aux conditions opératoires du réacteur sont données dans le tableau I ci dessous:

**Tableau I. Propriétés des fluides.**

| | |
|---|---|
| Masse volumique du liquide (kg/m3) | 700 |
| Masse volumique du gaz (kg/m3) | 20 |
| Viscosité dynamique du liquide (Pa.s) | 0,0005 |
| Viscosité dynamique du gaz (Pa.s) | 0,00002 |
| Concentration en particules colmatantes dans le liquide (en gramme /litre) | 0,05 |
| Vitesse superficielle liquide (cm/s) | 0,65 |
| Vitesse superficielle gaz (cm/s) | 10,0 |

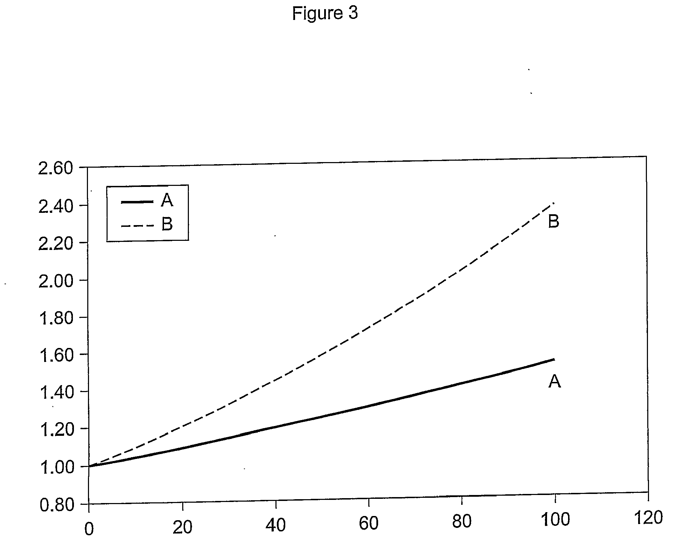

La courbe présentée sur la figure 3 montre l'évolution de la perte de charge prise entre deux points du lit catalytique avec le plateau de prédistribution selon l'invention (courbe A), et sans le plateau de prédistribution (courbe B).

La perte de charge en ordonnée est normalisée par rapport à la valeur initiale que l'on détermine en utilisant des corrélations bien connues de l'homme de l'art, et le temps en abscisse est mesuré en dizaine d'heures.

On constate que le plateau de prédistribution selon l'invention permet de réduire la perte de charge, et plus particulièrement son augmentation au fil du temps, de telle sorte qu'au bout de 80 unités de temps (800 heures), la perte de charge relative est de 1,3 avec le plateau de prédistribution et de 1,7 sans le plateau de prédistribution.

Une autre manière d'apprécier l'effet du plateau de prédistribution selon l'invention est de fixer la valeur limite de la perte de charge admissible dans le lit catalytique et de mesurer les temps respectifs pour atteindre la dite valeur, soit Ta avec le plateau de predistribution et Tb sans plateau de prédistribution. L'écart entre Ta et Tb (Ta-Tb) peut être de l'ordre de plusieurs mois, et typiquement de 3 mois, ce qui représente un allongement significatif de la durée de fonctionnement du réacteur avant arrêt pour colmatage.

## Revendications

1. Dispositif de filtration et de prédistribution d'une phase gaz et d'une phase liquide constituant l'alimentation d'un réacteur catalytique fonctionnant à co-courant descendant de gaz et de liquide, la phase liquide étant chargée en particules colmatantes, ledit dispositif étant situé en amont d'un plateau distributeur, dit plateau distributeur "aval", la distance (Dc) séparant le dispositif de prédistribution du plateau de distribution aval étant telle que le plan de base du dispositif de prédistribution est situé à plus de 50 mm de la partie la plus haute du plateau distributeur aval, ledit dispositif de filtration et de prédistribution étant constitué:
- d'un plateau perforé d'orifices (7) de diamètre (do) compris entre 3 et 6 mm, sensiblement horizontal et solidaire des parois du réacteur, sur lequel sont fixées des cheminées (3) sensiblement verticales, d'une densité comprise entre 30 et 100 par m² de section de lit, ouvertes à leur extrémité supérieure pour l'admission du gaz et à leur extrémité inférieure pour l'évacuation dudit gaz, ledit plateau supportant un lit de filtration (2) entourant les cheminées (3), lesdites cheminées (3) dépassant le niveau supérieur du lit de filtration (2) d'une hauteur (Hc) comprise entre 5 mm et 100 mm,
- d'au moins un tube déverseur (4) servant de déversoir liquide, de diamètre (Dt) compris entre 40 mm et 350 mm s'étendant sensiblement verticalement depuis un niveau supérieur situé au dessous du niveau de l'extrémité supérieure des cheminées et qui reste contenu à l'intérieur du lit de filtration (2), jusqu'à un niveau inférieur situé à une distance (Di) du niveau de base du plateau distributeur aval, Di étant inférieure à 300 mm, et préférentiellement inférieure à 200 mm, le diamètre (ds) de l'orifice de sortie du tube déverseur (4) étant compris entre 30 mm et 300 mm, et
le lit de filtration (2) étant constitué d'au moins deux couches de particules, une première couche supérieure constituée de particules inertes de diamètre compris entre 10 et 30 mm, et une seconde couche inférieure constituée de particules inertes de diamètre compris entre 2 et 10 mm, la hauteur totale (Ht) du lit d filtration étant comprise entre 200 mm et 600 mm.

2. Dispositif de filtration et de prédistribution selon la revendication 1, dans lequel chaque tube déverseur (4) est muni à sa partie supérieure d'un chapeau (5) limitant l'entrée de gaz, d'un diamètre supérieur d'au moins 10 mm à celui dudit tube déverseur (Dt).

3. Utilisation du dispositif de filtration et de prédistribution selon la revendication 1, dans un réacteur d'hydrotraitement, d'hydrogénation sélective, ou de conversion de résidus, ou de conversion de coupes hydrocarbonées à nombre d'atomes de carbone pouvant aller de 3 à 50, et préférentiellement de 5 à 30.

## Patentansprüche

1. Vorrichtung zum Filtern und zur Vorverteilung einer gasförmigen Phase und einer flüssigen Phase, die die Beschickung eines katalytischen Reaktors bilden, der mit absteigendem Gleichstrom von Gas und Flüssigkeit arbeitet, wobei die flüssige Phase mit verstopfenden Teilchen beladen ist, wobei die Vorrichtung stromaufwärts eines Verteilerbodens, "stromabwärtiger" Verteilerboden genannt, liegt, wobei der Abstand (Dc), der die Vorverteilungsvorrichtung vom stromabwärtigen Verteilerboden trennt, derart ist, dass die Basisebene der Vorverteilungsvorrichtung mehr als 50 mm von dem höchsten Teil des stromabwärtigen Verteilerbodens entfernt ist, wobei die Filtrations- und Vorverteilungsvorrichtung aus Folgendem besteht:
- einem Boden, der mit Öffnungen (7) mit einem Durchmesser (do) im Bereich zwischen 3 und 6 mm perforiert ist, der im Wesentlichen horizontal und fest mit Wänden des Reaktors verbunden ist, auf dem im Wesentlichen senkrechte Kamine (3) mit einer Dichte im Bereich zwischen 30 und 100 je m² Bettabschnitt befestigt sind, die an ihrem oberen Ende für den Eintritt des Gases und an ihrem unteren Ende für die Ableitung des Gases offen sind, wobei der Boden ein Filterbett (2) trägt, das die Kamine (3) umgibt, wobei die Kamine (3) die obere Ebene des Filterbetts (2) um eine Höhe (Hc) im Bereich zwischen 5 mm und 100 mm übersteigen,
- mindestens ein Auslaufrohr (4), das als Flüssigkeitsüberlauf dient, mit einem Durchmesser (Dt) im Bereich zwischen 40 mm und 350 mm, das sich im Wesentlichen senkrecht von einer oberen Ebene, die unterhalb der Ebene des oberen Endes der Kamine liegt und die im Innern des Filtrationsbetts (2) enthalten bleibt, bis zu einer unteren Ebene erstreckt, die in einem Abstand (Di) von der Basisebene des stromabwärtigen Verteilerbodens entfernt liegt, wobei Di kleiner 300 mm und bevorzugt kleiner 200 mm ist, wobei der Durchmesser (ds) der Ausgangsöffnung des Auslaufrohrs (4) im Bereich zwischen 30 mm und 300 mm liegt, und
wobei das Filterbett (2) aus mindestens zwei Teilchenschichten besteht, einer ersten oberen Schicht, die aus inerten Teilchen mit einem Durchmesser im Bereich zwischen 10 und 30 mm besteht, und einer zweiten unteren Schicht, die aus inerten Teilchen mit einem Durchmesser im Bereich zwischen 2 und 10 mm besteht, wobei die Gesamthöhe (Ht) des Filterbetts im Bereich zwischen 200 mm und 600 mm liegt.

2. Filter- und Vorverteilungsvorrichtung nach Anspruch 1, wobei jedes Auslaufrohr (4) an seinem oberen Teil mit einer Kappe (5) versehen ist, die den Gaseintritt begrenzt, mit einem Durchmesser, der mindestens 10 mm größer ist als der des Auslaufrohrs (Dt).

3. Verwendung der Filter- und Vorverteilungsvorrichtung nach Anspruch 1 in einem Reaktor zur Hydrobehandlung, zur selektiven Hydrierung oder zur Umwandlung von Rückständen oder zur Umwandlung von Kohlenwasserstoffschnitten mit einer Anzahl an Kohlenstoffatomen, die von 3 bis 50 und bevorzugt von 5 bis 30 reichen kann.

## Claims

1. A device for filtration and pre-distribution of a gas phase and a liquid phase constituting the supply for a catalytic reactor operating in gas and liquid co-current downflow mode, the liquid phase being charged with plugging particles, said device being located upstream of a distributor plate, termed the "downstream" distributor plate, the distance (Dc) between the pre-distribution device and the downstream distribution plate being such that the base plane of the pre-distribution device is located more than 50 mm from the upper part of the downstream distributor plate, said filtration and pre distribution device being constituted by:
• a plate perforated with orifices (7) with diameter (d0) in the range 3 to 6 mm, which is substantially horizontal and integral with the walls of the reactor, on which substantially vertical chimneys (3) are fixed with a density ranging between 30 and 100 per m2 of bed section, and which are open at their upper end to admit gas, and at their lower end to evacuate said gas, said plate supporting a filtration bed (2) surrounding the chimneys, said chimneys overtaking the upper level of the filtration bed (2) from a height ranging between 5 mm and 100 mm,
• at least one tube (4) acting as an overflow with a diameter (Dt) in the range 40 mm to 350mm, extending substantially vertically from an upper level located below the level of the upper end of the chimneys and which remains contained within the filtration bed (2), to a lower level located at a distance (Di) from the base of the downstream distributor plate, (Di) being less than 300 mm, and preferably less than 200 mm, the diameter (ds) of the exit orifice of the tube acting s an overflow (4) being in the range 30 mm to 300 mm, and
said filtration bed (2) being constituted by at least two layers of particles an upper first layer constituted by inert particles with a diameter in the range 10 to 30 mm, and a lower second layer constituted by inert particles with a diameter in the range 2 to 10 mm, the total height (Ht) of the filtration bed (2) being in the range from 200 mm to 600 mm.

2. A device according to claim 1, in which the upper portion of each overflow tube (4) is provided with a cap (5) limiting the entrance of gas, with a diameter which is at least 10 mm larger than that of said overflow tube (Dt).

3. Use of a filtration and pre-distribution device in accordance with claim 1, in a hydrotreatment reactor, a selective hydrogenation reactor, a residue conversion reactor or a reactor for converting hydrocarbon cuts containing from 3 to 50 carbon atoms, preferably 5 to 30.
